# EUROPÄISCHE PATENTSCHRIFT

(11) **EP 2 523 835 B1**
(45) Veröffentlichungstag und Bekanntmachung des Hinweises auf die Patenterteilung: **26.04.2017**
(21) Anmeldenummer: 11701745.9
(22) Anmeldetag: 12.01.2011
(51) Int. Cl.: B60T 7/10, B60T 13/02, B60T 13/74, F16D 65/14

(54) **ANTRIEB ZUR BETÄTIGUNG EINER FESTSTELLBREMSE**
DRIVE FOR ACTUATING A PARKING BRAKE
ENTRAÎNEMENT POUR L'ACTIONNEMENT D'UN FREIN DE STATIONNEMENT

(30) Priorität: 13.01.2010 DE 102010004602
(43) Veröffentlichungstag der Anmeldung: 21.11.2012
(73) Patentinhaber: IMS Gear SE & Co. KGaA, 78166 Donaueschingen (DE)
(72) Erfinder: HOFSCHULTE, Wolfram-Heinrich, 79848 Bonndorf (DE)
(74) Vertreter: Westphal, Mussgnug & Partner Patentanwälte mbB
(86) Internationale Anmeldenummer: PCT/EP2011/000099
(87) Internationale Veröffentlichungsnummer: WO 2011/085971

(56) Entgegenhaltungen:
- DE-A1- 19 913 497
- DE-A1-102006 010 483
- DE-A1-102006 056 346
- DE-B3- 10 308 886
- US-A1- 2008 217 117

## Beschreibung

Die Erfindung betrifft einen Antrieb zur Betätigung einer Feststellbremse gemäß dem Oberbegriff des Anspruchs 1.

Üblicherweise umfasst ein Bremssattel mindestens eine Bremsscheibe, mindestens einen Bremsbelag und mindestens einen Bremskolben. Der Bremskolben drückt den Bremsbelag axial und rechtwinklig gegen die Bremsscheibe. Beim Betätigen einer bekannten, in den Bremssattel integrierten Feststellbremse durch den Fahrer wird eine Kraft mittels eines Handbremshebels und eines daran befestigten Bowdenzugs auf den rein mechanischen Bremssattel aufgebracht. Eine lineare Krafteinleitung wird dabei in ein Drehmoment umgewandelt, um einen Betätigungshebel zu drehen. Schließlich muss das Drehmoment wieder in eine lineare Kraftweiterleitung umgewandelt werden, die die Bremsbeläge gegen eine Bremsscheibe drückt.

Bei solchen Bremssätteln mit Betätigungshebel ist der Betätigungshebel in einem Bereich des distalen Endes des Bremskolbens an einem Gehäuse um dessen Topfachse drehbar befestigt. Die Topfachse ist entweder senkrecht oder quer, insbesondere rechtwinklig, zur Bremskolbenachse ausgerichtet. In dem Topf findet eine Kraftübertragung je nach Anordnung der Topfachse statt. Eine senkrechte Anordnung beispielsweise erfordert eine Kraftübertragung von dem Hebel über einen z.B. in dem Topf angeordneten Exzenter zum Bremskolben. Die Ausbildung der Kraftübertragung von dem Hebel auf den Bremskolben soll hier nicht weiter vertieft werden.

Daneben sind aus der DE 197 32 168 C2 mittlerweile hydraulische Fahrzeugbremsen bekannt, die oben beschriebene Funktion einer Feststellbremse elektromechanisch realisieren. Dazu ist ein Elektromotor seitlich neben einem Fahrzeugbremsgehäuse angeordnet. Eine Abtriebswelle des Elektromotors verläuft dabei mit seitlichem Abstand parallel zu einer Mittelachse eines Bremskolbens zur Kraftweiterleitung. Die Abtriebswelle tritt auf der vom Bremskolben abgewandten Seite aus dem Elektromotor aus. Zwischen dem Elektromotor und dem Bremskolben wirkt ein Untersetzungsgetriebe.
Weiterer Stand der Technik ist in der DE 103 08 886 B3 und in der US 2008/0217117 A1 offenbart.
Es besteht in Anschauung der bekannten Fahrzeugbremsen nach wie vor ein Problem darin, einen Bremssattel mit integrierter Feststellbremse, die konventionell mit einem Bowdenzug betätigt wird, mit einer elektromechanischen Betätigung auszurüsten, ohne den Bremssattel prinzipiell verändern zu müssen und ohne dass deutlich mehr Bauraum benötigt wird. Eine Lösung des Problems sollte möglichst auf alle Varianten von Bremssätteln anwendbar sein.

Dieses Problem wird gelöst durch einen elektromechanischen Schnecken-Spindelantrieb zur Betätigung der Feststellbremse mit den Merkmalen gemäß dem kennzeichnenden Teil des Anspruchs 1.

Vorteilhafte Ausführungsformen sind in den Unteransprüchen und der nachfolgenden Figurenbeschreibung angegeben.

Es zeigen:
- Fig. 1: eine perspektivische Darstellung eines ersten Bremssatteltyps mit einer mittels eines Gehäuses verschlossenen Betätigungseinrichtung und einem ebenso verschlossenen Antrieb gemäß einem ersten Ausführungsbeispiel,
- Fig. 2: eine perspektivische Darstellung des ersten Bremssatteltyps mit der Betätigungseinrichtung und dem Antrieb aus Fig. 1, wobei das Gehäuse geöffnet und ohne Gehäusedeckel dargestellt ist,
- Fig. 3: eine perspektivische Darstellung des ersten Bremssatteltyps mit der Betätigungseinrichtung und dem Antrieb aus Fig. 1, wobei ein zwischen die Betätigungseinrichtung und den Antrieb geschaltetes SchneckenSpindelgetriebe in Explosionsdarstellung dargestellt ist,
- Fig. 4: eine perspektivische Darstellung eines zweiten Bremssatteltyps mit einer Betätigungseinrichtung in abweichender Ausrichtung und einem in einem weiteren Gehäuse verschlossenen Antrieb gemäß dem ersten Ausführungsbeispiel,
- Fig. 5: eine perspektivische Darstellung des zweiten Bremssatteltyps mit der Betätigungseinrichtung und dem Antrieb aus Fig. 4, wobei das weitere Gehäuse geöffnet und ohne Gehäusedeckel dargestellt ist,
- Fig. 6: eine perspektivische Darstellung des zweiten Bremssatteltyps mit der Betätigungseinrichtung und dem Antrieb aus Fig. 4, wobei das analog zur Figur 3 zwischen die Betätigungseinrichtung und den Antrieb geschaltete Schnecken-Spindelgetriebe in Explosionsdarstellung dargestellt ist,
- Fig. 7: eine perspektivische Darstellung des ersten Bremssatteltyps mit einer weiteren mittels eines Gehäuses verschlossenen Betätigungseinrichtung und einem ebenso verschlossenen Antrieb gemäß einem zweiten Ausführungsbeispiel,
- Fig. 8: eine perspektivische Darstellung des ersten Bremssatteltyps mit der Betätigungseinrichtung und dem Antrieb aus Fig. 7, wobei das Gehäuse geöffnet und ohne Gehäusedeckel dargestellt ist,
- Fig. 9: eine perspektivische Darstellung des ersten Bremssatteltyps mit der Betätigungseinrichtung und dem Antrieb aus Fig. 7, wobei das analog zur Figur 3 zwischen die Betätigungseinrichtung und den Antrieb geschaltete Schnecken-Spindelgetriebe in Explosionsdarstellung dargestellt ist,
- Fig. 10: ein weiteres Beispiel eines erfindungsgemäßen Antriebs, und
- Fig. 11: noch ein anderes Beispiel eines erfindungsgemäßen Antriebs.

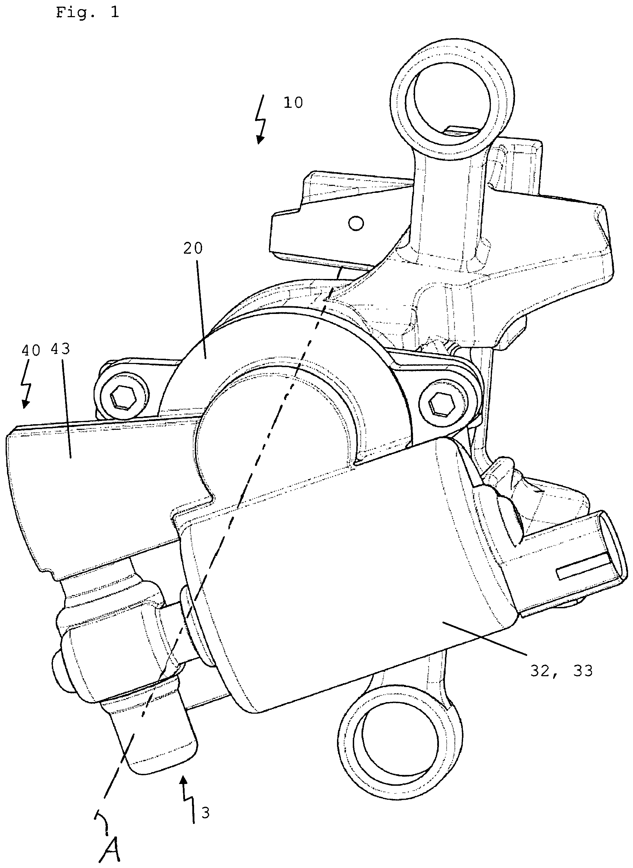

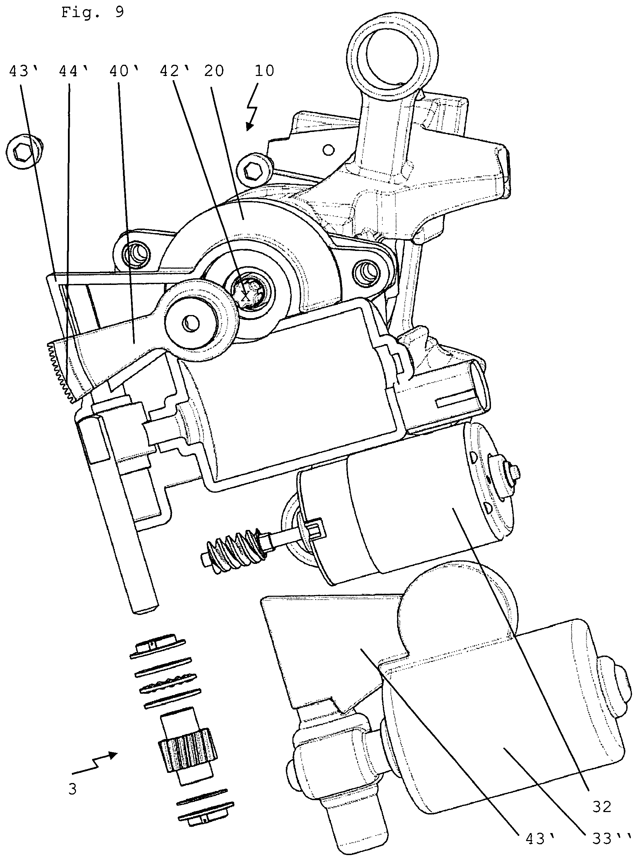

In den Figuren 1 bis 3 und 7 bis 9 ist ein erster Typ eines Bremssattels 10 dargestellt. Dieser Typ weist ein Gehäuse 20 mit Ausrichtung parallel zu einer Bremskolbenachse A eines nicht näher dargestellten Bremskolbens 11 auf. Aus dem Gehäuse 20 tritt entlang der Bremskolbenachse A abgewandt zum Bremskolben eine Welle mit einem Drehzentrum 42 aus. Die Welle ist mittels eines Betätigungshebels 40 um das Drehzentrum 42 drehbar.

Eine Drehung der Welle bewirkt eine lineare Bewegung des in den Darstellungen und im Gehäuse sitzenden nicht sichtbaren Bremskolbens, wodurch ein ebenfalls nicht sichtbarer Bremsbelag gegen eine in den Darstellungen nicht sichtbare Bremsscheibe gedrückt wird.

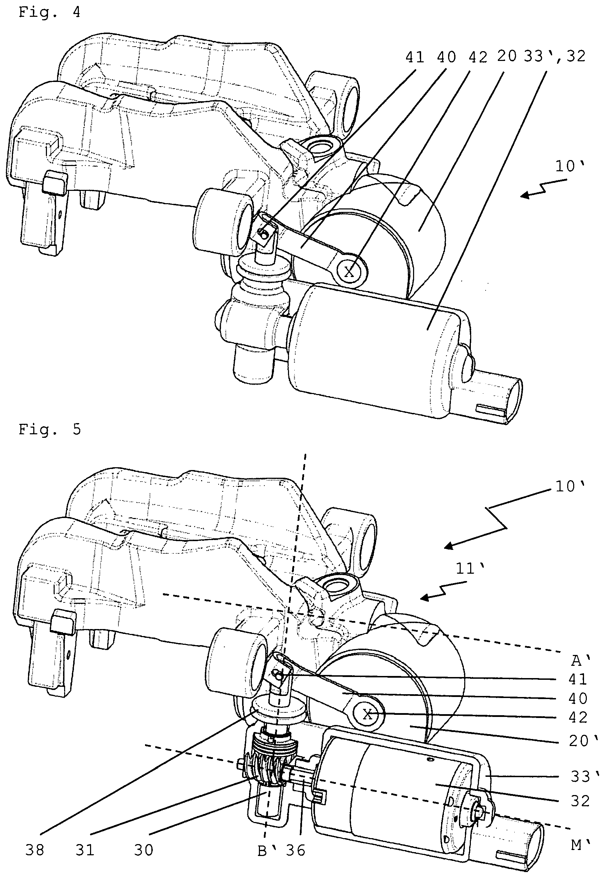

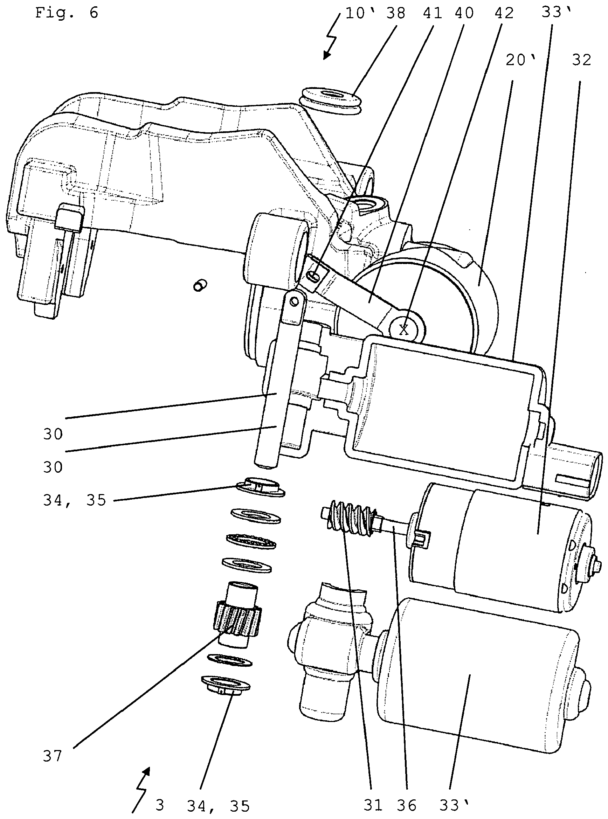

In den Figuren 4 bis 6 ist ein zweiter Typ eines Bremssattels 10' mit einem Gehäuse 20' dargestellt. Das Gehäuse 20' allerdings ist jetzt quer zur Bremskolbenachse A' ausgerichtet. Ein entsprechend angebrachter Betätigungshebel 40 kann genauso wie bei dem ersten Bremssattel der Figuren 1-3 ausgebildet sein. Er dreht in dem jetzigen Beispiel des zweiten Bremssattels 10' ebenfalls um ein Drehzentrum 42 des Topfes 20'. Das Drehzentrum 42 liegt jedoch an anderer Stelle, da der Topf 20' im Vergleich zum Topf 20 geschwenkt angeordnet ist.

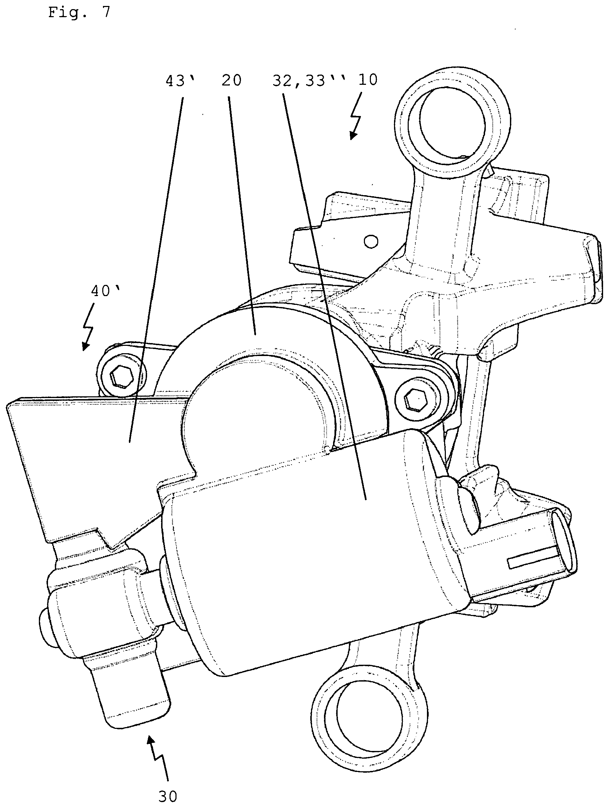

In zwei Ausführungsbeispielen ist der Betätigungshebel 40, 40' dargestellt. Die Figuren 1 bis 6 zeigen das erste Ausführungsbeispiel, wobei der Betätigungshebel 40 ein Langloch 41 aufweist. Die Figuren 7 bis 9 zeigen das zweite Ausführungsbeispiel, dessen Betätigungshebel 40' statt des Langlochs 41 ein Zahnsegment 44' aufweist.

In den Figuren sind generell gleiche Bezugszeichen für gleiche Teile vergeben. Es sind zur besseren Übersicht nicht alle Bezugszeichen in allen Figuren eingetragen.

In Fig. 1 ist ein Bremssattel 10 gemäß dem ersten Typ dargestellt. Der Fahrer eines Fahrzeugs betätigt eine herkömmliche Feststellbremse in dem Bremssattel 10 durch Zug an einem Bremshebel. Diese lineare Kraft wird in dem Fall des Bremssattels 10 üblicherweise mittels eines Bowdenzugs von dem Bremshebel auf den Hebelarm des Betätigungshebels 40 übertragen. Der Betätigungshebel 40 dreht sich in Folge um eine Drehachse, die senkrecht zum Hebelarm des Betätigungshebels 40 ausgerichtet ist. Die Drehbewegung des Betätigungshebels 40 wird in dem Bremssattel 10 in eine lineare Bewegung eines Bremskolbens 11 umgewandelt. In dem Bremssattel 10 drückt bei Betätigung mittels des Betätigungshebels 40 der Bremskolben 11 mindestens einen Bremsklotz gegen eine Bremsscheibe, die mit einem Rad eines Fahrzeugs rotiert.

Der Zug an dem nicht dargestellten Bremshebel und die Kraftübertragung durch den ebenfalls nicht dargestellten Bowdenzug sind in einem erfindungsgemäßen Antrieb, wie er in Figur 1 dargestellt ist, durch einen Elektromotor 32 und ein damit gekoppeltes Getriebe, insbesondere ein Schnecken-Spindelgetriebe 3 ersetzt. Der Elektromotor 32 ist entsprechend über das Schnecken-Spindelgetriebe 3 mit dem Betätigungshebel 40 gekoppelt. Ein gemeinsames Gehäuse 33, 43 deckt den Elektromotor 32, das Schnecken-Spindelgetriebe 3 und den Betätigungshebel 40 ab. Auch ein separates Motorgehäuse 33' gemäß Figur 4 ist stattdessen verwendbar. Ebenso könnte das Gehäuse 43 separat als Hebelgehäuse ausgebildet sein. Eine abweichende Form eines Gehäuses in dem Bereich des Betätigungshebels 40' ist durch das Hebelgehäuse 43' in den Figuren 7 bis 9 dargestellt.

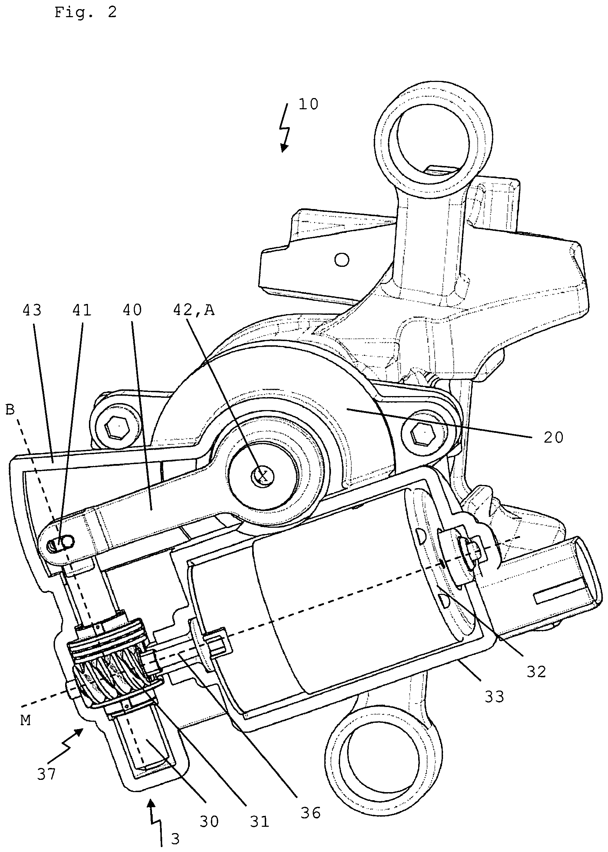

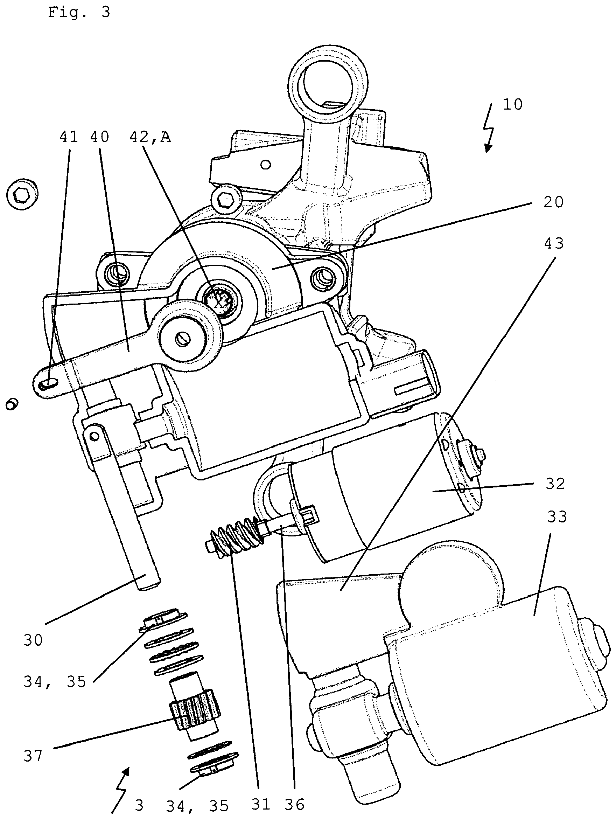

Die Figuren 2, 5 und 8 erlauben Einblicke in das Innere des jeweiligen Gehäuses 33, 33', 33'', 43, 43'. In Ergänzung ist das in allen Darstellungen ähnlich aufgebaute Schnecken-Spindelgetriebe 3 in Explosionsdarstellungen der Figuren 3, 6 und 9 mit seinen entlang des Kraft- bzw. Momentenflusses zu nennenden Komponenten Schnecke 31, Spindelmutter 37 und Spindel 30 gezeigt. Die Schnecke 31 dreht mit einer Motorachse M des Elektromotors 32 und ist dazu drehfest auf seiner Abtriebswelle 36 befestigt. Die Abtriebswelle 36 kann distal auch direkt als Schnecke ausgebildet sein. Die Schnecke 31 treibt die Spindelmutter 37 an, sodass diese sich um eine Spindelachse B dreht, die in jedem beliebigen Winkel zur Motorachse M ausgerichtet sein kann.

Die Spindelmutter 37 ist axial und radial ortsfest gelagert. Dazu übernehmen Anlaufscheiben bzw. -buchsen die Funktion eines Axial- 34 und/oder Radiallagers 35. Diese Funktionen lassen sich selbstverständlich auch auf mehrere Teile verteilen. Weitere Scheiben 38 können beispielsweise zum Spielausgleich oder zur weiteren Unterstützung und Wirkungsgradverbesserung der Spindel 30 vorgesehen sein. Derart ortsfest aber rotierbar gelagert und angetrieben treibt die Spindelmutter 37 die Spindel 30 entlang der Spindelachse B durch ihr Inneres. Dazu weist die Spindelmutter 37 innen ein Gewinde auf, das mit der Spindel 30 zusammenwirkt.

Der Elektromotor 32 zum Antrieb des Schnecken-Spindelgetriebes 3 ist gemäß den Figuren 1 bis 3 mit seinem Gehäuse 33 außen über das Getriebegehäuse an dem Bremssattel 10 befestigt. Seine Abtriebswelle 36 tritt entlang der Motorachse M quer zur Bremskolbenachse A des Bremskolbens 10 aus.

Die Spindel 30 ist mit dem Betätigungshebel 40 gekoppelt. Sie ist dazu schwenkbar in dem in dem Betätigungshebel 40 vorgesehenen Langloch 41 aufgenommen. Wird die Spindelmutter 37 gedreht, verschiebt sie sich die Spindel 30 entlang der Spindelachse B und drückt gegen den Hebelarm des Betätigungshebels 40, sodass sich der Betätigungshebel 40 um sein Drehzentrum 42 dreht.

Das Drehzentrum 42 liegt in den dargestellten Ausführungsbeispielen vorteilhaft auf der Motorachse M. Es kann auch anderenorts liegen. Die entsprechende Drehachse steht gemäß den Figuren 1 bis 9 senkrecht auf dem Hebelarm des Betätigungshebels 40, 40' und auch senkrecht auf der Motorachse M.

Das Langloch 41 ist mit seiner Längsachse auf das Drehzentrum 42 hin ausgerichtet. Eine Aufnahme der zwangsläufig schwenkenden Spindel 30 in dem Langloch 41 kann sich folglich in dem Langloch 41 zum Drehzentrum 42 hin bewegen, wenn die Bremse angezogen wird. Dazu zieht der Fahrer nicht wie üblich an einem Bremshebel. Es genügt stattdessen beispielsweise ein Tastendruck zur Bestromung des Elektromotors.

Die Aufnahme der Spindel 30 bewegt sich in dem Langloch 41 von dem Drehzentrum 42 weg, wenn die Bremse gelöst wird. Das System funktioniert natürlich auch genau umgekehrt.

Der übliche Bowdenzug 20 ist - wie vorangehend beschrieben - durch den elektromotorischen Antrieb mit einer Getriebeeinheit, die an dem Betätigungshebel 40, 40' angreift, ersetzt. Alternativ kann, wenn weiterhin ein Bowdenzug erhalten bleiben soll, ein Angriff durch die Spindel 30 bzw. die Getriebeeinheit an dem Bowdenzug oder dem Betätigungshebel 40, 40' zusätzlich erfolgen.

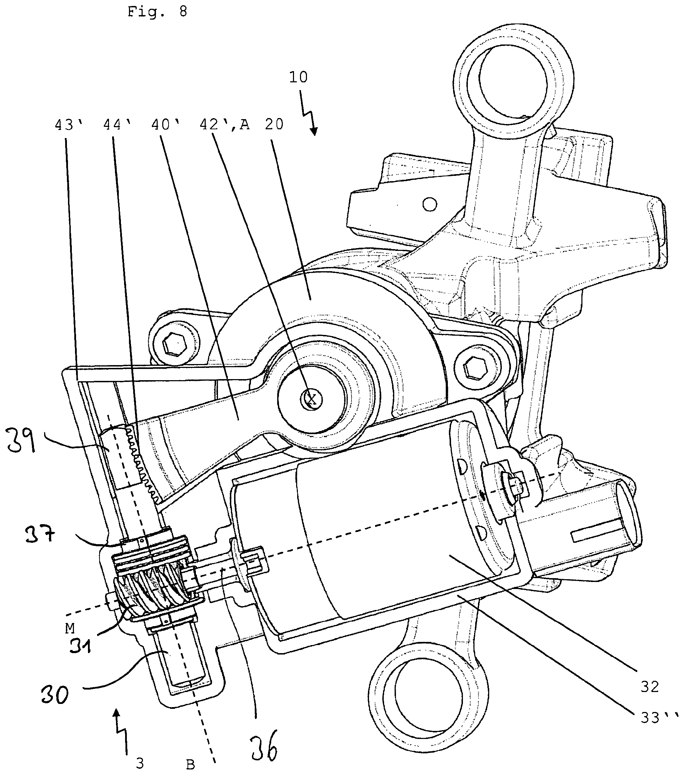

Eine alternative Kopplung der Spindel 30 mit dem Betätigungshebel 40' ist in den Figuren 7 bis 9 gezeigt. Die Spindelmutter 37 sitzt in diesem Beispiel formschlüssig auf der Spindel 30. Die Spindelmutter 37 wird durch die Antriebsschnecke 31 des Motors 32 in Rotation versetzt wird, so dass sich die Spindel 30 je nach Drehrichtung in die eine oder andere Längsrichtung bewegt. Die vom Motor 32 längsbewegte Spindel 30 kämmt an ihrem in Figur 8 gezeigten oberen Ende, das als Zahnstange 39 ausgebildet ist, mit dem bogenförmigen Zahnsegment 44', das vorzugsweise einstückig an den Betätigungshebel 40' angeformt ist. Der Betätigungshebel 40' weist hierfür seinem Drehzentrum 42' abgewandt ein bogenförmig - mit Bezug zu dem Drehzentrum 42 konvex - ausgeführtes Zahnsegment 44' auf. Das Zahnsegment 44' wälzt über die Steigerung der Spindel 30 mit der an ihrem Ende als gerad- oder schrägverzahnten Zahnstange 39 ausgebildete Spindel 30 ab. Im letzteren Fall der Schrägverzahnung kann die Steigung der Spindel 30 genutzt werden, was eine gesondert angebrachte Schrägverzahnung nicht mehr erforderlich macht. Durch die zuvor beschriebene Ausführungsart wird der Betätigungshebel 40' um sein Drehzentrum 42 gedreht. Ein solcher Betätigungshebel 40' könnte selbstverständlich auch bei einem erfindungsgemäßen Antrieb für den zweiten Bremssatteltyp 10' gewählt werden.

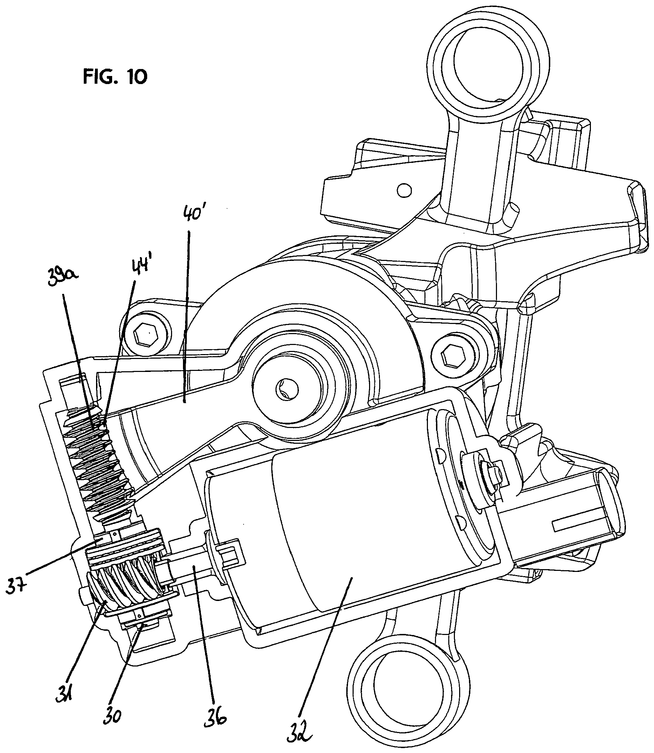

Eine andere mechanische Kopplung der Spindel 30 mit dem Betätigungshebel 40' besteht in einer drehenden Spindel 30 mit Spindelmutter. Das Ausführungsbeispiel von Figur 10 unterscheidet sich von den Figuren 7 bis 9 dadurch, dass anstelle einer Zahnstange 39 am Ende der Spindel 30 eine Schnecke vorgesehen ist, die sich formschlüssig mit der Spindel 30 dreht.

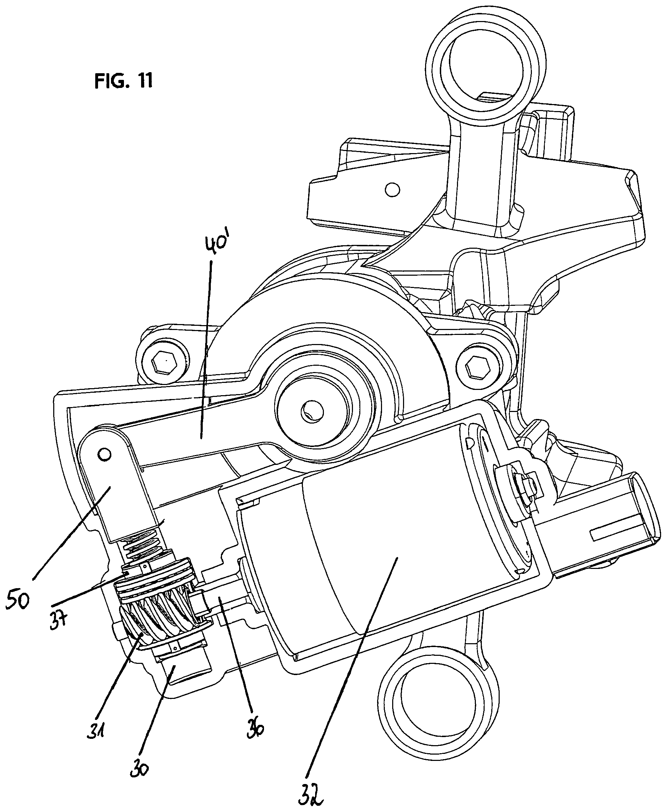

Eine noch andere mechanische Kopplung der Abtriebswelle 36 des Motors 32 mit dem Betätigungshebel 40' besteht in der in Fig. 11 beschriebenen Ausführungsform. Dort ist das Ende des Betätigungshebels 40' gelenkig mit einem Halteelement 50 verbunden. In dieses Halteelement 50 ist das obere Ende der Spindel 30 eingeschraubt. Die Spindel 30 wiederum ist drehbeweglich, im Übrigen jedoch feststehend und damit nicht längsbeweglich angeordnet. Hierfür sitzt in bereits bekannter Weise die Spindelmutter 37 drehfest auf der Spindel 30. Die Spindelmutter 37 kämmt mit der Schnecke 31, so dass beim Antrieb des Elektromotors 32 - je nach Drehrichtung der Abtriebswelle 36 - die Spindel 30 nach links oder rechts dreht. Bei der einen Drehrichtung der Spindel 30 wird das Halteelement 50 weiter auf die Spindel 30 aufgeschraubt und dadurch der Betätigungshebel 40' nach unten gezogen. Bewegt sich die Spindel 30 in die entgegengesetzte Richtung, hebt sich das Halteelement 50 immer weiter von der Spindel 30 ab, so dass der Betätigungshebel 40' nach oben geschwenkt wird

Ein erfindungsgemäßer Antrieb ist für die gemeinsame Montage mit insbesondere rein mechanischen Bremssätteln geeignet. Darüber hinaus ist eine Verwendung solcher Antriebe zum Nachrüsten vorhandener Bremsanlagen in Kraftfahrzeugen möglich.

### Bezugszeichenliste

- 3: Schnecken-Spindelgetriebe

- 10, 10': Bremssattel
- 11, 11': Bremskolben

- 20, 20': Gehäuse

- 30: Spindel
- 31: Schnecke
- 32: Elektromotor
- 33, 33', 33": Motorgehäuse
- 34: Axiallager
- 35: Radiallager
- 36: Abtriebswelle
- 37: Spindelmutter
- 38: Scheibe
- 39: Zahnstange
- 39a: Schnecke

- 40, 40': Betätigungshebel
- 41: Langloch
- 42, 42': Drehzentrum
- 43, 43': Hebelgehäuse
- 44': Zahnsegment
- 50: Halteelement

- A, A': Bremskolbenachse
- B, B': Spindelachse
- M, M': Motorachse

## Patentansprüche

1. Antrieb zur Betätigung einer Feststellbremse in einem Bremssattel (10, 10'), wobei der Bremssattel (10, 10') mindestens einen Bremskolben (11, 11') mit einer Bremskolbenachse (A, A') aufweist, der durch einen Betätigungshebel (40, 40') mit einem Drehzentrum (42, 42') betätigbar ist,
wobei
ein Elektromotor (32) mit einer Abtriebswelle (36) vorgesehen ist, wobei der Elektromotor (32) am Bremssattel (10, 10') befestigt ist, und wobei die Abtriebswelle (36) mit dem Betätigungshebel (40, 40') mechanisch gekoppelt ist,
**dadurch gekennzeichnet, dass** die Abtriebswelle (36) mit drehfest angebrachter Antriebsschnecke in ein Schnecken-Spindelgetriebe (3) mit einer Spindel (30) eingreift, und die Spindel (30) mit dem Betätigungshebel (40, 40') gekoppelt ist.

2. Antrieb nach Anspruch 1,
**dadurch gekennzeichnet, dass** der Elektromotor (32) außen an dem Bremssattel (10, 10') befestigt ist.

3. Antrieb nach einem der Ansprüche 1 oder 2,
**dadurch gekennzeichnet, dass** die Motorachse (M, M') quer, insbesondere rechtwinklig, oder parallel zur Bremskolbenachse (A, A') ausgerichtet ist.

4. Antrieb nach einem der vorangehenden Ansprüche,
**dadurch gekennzeichnet, dass** der Elektromotor (32) an seiner austretenden Abtriebswelle (36) eine Schnecke aufweist, die mit dem Bremskolben (10, 10') koppelbar ist.

5. Antrieb nach einem der vorangehenden Ansprüche,
**dadurch gekennzeichnet, dass** der Elektromotor (32) mit seiner austretenden Abtriebswelle (36) dem Bremskolben (10') zugewandt angeordnet ist.

6. Antrieb nach einem der vorangehenden Ansprüche oder nach dem Oberbegriff des Anspruchs 1,
**dadurch gekennzeichnet, dass** das Drehzentrum (42, 42') des Betätigungshebels (40, 40') auf der Motorachse (M, M') liegt.

7. Antrieb nach einem der vorangehenden Ansprüche,
**dadurch gekennzeichnet, dass** die Spindel (30) entlang einer Spindelachse (B, B'), senkrecht zur Motorachse (M, M'), ausgerichtet ist.

8. Antrieb nach einem der vorangehenden Ansprüche,
**dadurch gekennzeichnet, dass** ein Langloch (41) in oder an dem distalen Ende des Betätigungshebels (40) angeordnet und insbesondere auf das Drehzentrum (42) hin ausgerichtet ist, wobei das Langloch (41) ein Element, insbesondere eine Spindel (30), besonders bevorzugt schwenkbar aufnimmt.

9. Antrieb nach einem der vorangehenden Ansprüche,
**dadurch gekennzeichnet, dass** der Betätigungshebel (40') an seinem distalen Ende ein Zahnsegment (44') aufweist.

10. Antrieb nach Anspruch 9,
**dadurch gekennzeichnet, dass** das Zahnsegment (44') in Bezug zum Drehzentrum (42') konvex ausgebildet ist, insbesondere mit von dem Drehzentrum (42') abgewandten Zähnen.

11. Antrieb nach einem der vorangehenden Ansprüche,
**dadurch gekennzeichnet, dass** das Zahnsegment (44') mit einer auf der Spindel (30) angebrachten Zahnstange oder Schnecke zusammenwirkt.

12. Antrieb nach einem der vorangehenden Ansprüche,
**dadurch gekennzeichnet, dass** der Betätigungshebel (40') eine Spindelmutter aufnimmt, welche mit einer auf einer drehenden Spindel (30) drehfest sitzenden Spindelmutter zusammenwirkt, wobei die Spindel (30) von dem Elektromotor (32) antreibbar ist.

## Claims

1. Drive for actuating a parking brake in a calliper (10, 10'), wherein the calliper (10, 10') has at least one brake piston (11, 11') having a brake piston axis (A, A'), said brake piston (11, 11') being able to be actuated by an actuation lever (40, 40') having a centre of rotation (42, 42'),
wherein
an electric motor (32) is provided with an output shaft (36), wherein the electric motor (32) is attached to the calliper (10, 10'), and wherein the output shaft (36) is mechanically coupled to the actuation lever (40, 40'),
**characterised in that**
the output shaft (36) having a non-rotatably attached drive worm engages with a worm spindle gear (3) having a spindle (30), and the spindle (30) is coupled to the actuation lever (40, 40').

2. Drive according to claim 1,
**characterised in that**
the electric motor (32) is attached outside on the calliper (10, 10').

3. Drive according to one of claims 1 or 2,
**characterised in that**
the motor axis (M, M') is aligned transversely, in particular at a right angle with, or parallel to the brake piston axis (A, A').

4. Drive according to one of the preceding claims,
**characterised in that**
the electric motor (32) has a worm on its exiting output shaft (36), said worm being able to be coupled to the calliper (10, 10').

5. Drive according to one of the preceding claims,
**characterised in that**
the electric motor (32) is arranged to face towards the calliper (10') with its exiting output shaft (36).

6. Drive according to one of the preceding claims or according to the preamble of claim 1,
**characterised in that**
the centre of rotation (42, 42') of the actuation lever (40, 40') lies on the motor axis (M, M').

7. Drive according to one of the preceding claims,
**characterised in that**
the spindle (30) is aligned along a spindle axis (B, B'), perpendicularly to the motor axis (M, M').

8. Drive according to one of the preceding claims,
**characterised in that**
a slot (41) is arranged in or on the distal end of the actuation lever (40) and in particular is aligned towards the centre of rotation (42), wherein the slot (41) receives an element, in particular a spindle (30), particularly preferably in a pivotable manner.

9. Drive according to one of the preceding claims,
**characterised in that**
the actuation lever (40') has a toothed segment (44') on its distal end.

10. Drive according to claim 9,
**characterised in that**
the toothed segment (44') is formed convexly with respect to the centre of rotation (42'), in particular having teeth which face away from the centre of rotation (42').

11. Drive according to one of the preceding claims,
**characterised in that**
the toothed segment (44') interacts with a toothed rack or worm which is attached to the spindle (30).

12. Drive according to one of the preceding claims,
**characterised in that**
the actuation lever (40') receives a spindle nut which interacts with a spindle nut resting non-rotatably on a rotating spindle (30), wherein the spindle (30) is able to be driven by the electric motor (32).

## Revendications

1. Système d'entraînement permettant d'actionner un frein de stationnement dans un étrier (10, 10'), cet étrier (10, 10') comprenant au moins un piston de frein (11, 11') ayant un axe de piston de frein (A, A') qui peut être actionné par un levier d'actionnement (40, 40') ayant un centre de rotation (42, 42'),
système d'entraînement dans lequel il est prévu un moteur électrique (32) ayant un arbre de sortie (36), ce moteur électrique (32) étant fixé à l'étrier (10, 10'), et l'arbre de sortie (36) étant mécaniquement couplé au levier d'actionnement (40, 40'),
**caractérisé en ce que**
l'arbre de sortie (36) vient en prise avec une vis sans fin d'entraînement montée fixe en rotation dans une transmission à vis sans fin et à broche (3) comprenant une broche (30), couplée au levier d'actionnement (40, 40').

2. Système d'entraînement conforme à la revendication 1,
**caractérisé en ce que**
le moteur électrique (32) est fixé extérieurement à l'étrier (10, 10').

3. Système d'entraînement conforme à l'une des revendications 1 ou 2,
**caractérisé en ce que**
l'axe du moteur (M, M') est orienté transversalement, en particulier perpendiculairement ou parallèlement à l'axe (A, A') du piston de frein.

4. Système d'entraînement conforme à l'une des revendications précédentes,
**caractérisé en ce que**
le moteur électrique (32) est équipé sur son arbre de sortie (36) d'une vis sans fin pouvant être couplée au piston de frein (10, 10').

5. Système d'entraînement conforme à l'une des revendications précédentes,
**caractérisé en ce que**
l'arbre de sortie (36) du moteur électrique (32) est tourné vers le piston de frein (10').

6. Système d'entraînement conforme à l'une des revendications précédentes ou conforme au préambule de la revendication 1,
**caractérisé en ce que**
le centre de rotation (42, 42') du levier d'actionnement (40, 40') est situé sur l'axe du moteur (M, M').

7. Système d'entraînement conforme à l'une des revendications précédentes,
**caractérisé en ce que**
la broche (30) est orientée le long d'un axe de broche (B, B') perpendiculairement à l'axe du moteur (M, M').

8. Système d'entraînement conforme à l'une des revendications précédentes,
**caractérisé en ce qu'**
un trou oblong (41) est situé dans ou à l'extrémité distale du levier d'actionnement (40), et est en particulier orienté vers le centre de rotation (42), ce trou oblong (41) recevant un élément, en particulier une broche (30), de façon particulièrement préférentielle mobile en pivotement.

9. Système d'entraînement conforme à l'une des revendications précédentes,
**caractérisé en ce que**
le levier d'actionnement (40') comporte un segment denté (44') à son extrémité distale.

10. Système d'entraînement conforme à la revendication 9,
**caractérisé en ce que**
le segment denté (44') est convexe par rapport au centre de rotation (42'), en particulier avec des dents situées à l'opposé du centre de rotation (42').

11. Système d'entraînement conforme à l'une des revendications précédentes,
**caractérisé en ce que**
le segment denté (44') coopère avec une crémaillère ou une vis sans fin montée sur la broche (30).

12. Système d'entraînement conforme à l'une des revendications précédentes,
**caractérisé en ce que**
le levier d'actionnement (40') reçoit un écrou de broche qui coopère avec un écrou de broche fixé solidairement en rotation sur une broche rotative (30), la broche (30) pouvant être entraînée par le moteur électrique (32).
